Europäisches Patentamt

European Patent Office

Office européen des brevets

(11) Publication number: **0 108 533**
**A1**

# EUROPEAN PATENT APPLICATION

(21) Application number: 83306368.8

(22) Date of filing: 20.10.83

(51) Int. Cl.³: **F 16 B 29/00**
**F 16 B 39/34**

(30) Priority: 26.10.82 GB 8230554

(43) Date of publication of application:
16.05.84 Bulletin 84/20

(84) Designated Contracting States:
AT BE CH DE FR GB IT LI LU NL SE

(71) Applicant: THE BRITISH SCREW COMPANY LIMITED
153 Kirkstall Road
Leeds LS4 2AT(GB)

(72) Inventor: Brewster, Sidney Arthur
7, St. Ann's Rise
Leeds LS4 2TJ(GB)

(74) Representative: Thorpe, Brian et al,
Guest Keen & Nettlefolds plc. Group Patents and
Licensing Department Group Head Office P.O. Box 55
Smethwick, Warley West Midlands B66 2RZ(GB)

(54) **Fastener and seal combination.**

(57) A fastener and seal combination, preferably for a cladding fastener, comprises an enlarged driving head 16 on the fastener having a circular recess 20 on its under-surface shaped to receive a seal comprising a metal washer 24 fitting within the recess and an elastomeric washer 26 bonded to the metal washer and protruding from the recess.

FIG.1.

EP 0 108 533 A1

0108533

P.82.080/BT    Fastener and Seal Combination

This invention relates to a fastener such as a screw or bolt of the type having a threaded shank and an enlarged diameter head for engagement by a driving tool. The invention is particularly applicable to a screw or bolt used for securing cladding to a rigid support such as for example in the securing of roof cladding to a purlin.

One of the problems in securing cladding to a rigid support is that a good weather-tight seal must be provided and maintained between the head of the fastener and the outer face of the cladding material and it is an object of the present invention to provide a fastener and seal combination which is effective in use yet simple and economic to produce.

In accordance with the invention there is provided a fastener and seal combination wherein the fastener comprises a threaded shank and an enlarged head providing a recess on its under surface, and the seal comprises a metal washer having an elastomeric washer bonded thereto with the metal washer of the seal being shaped to fit within said recess in the fastener head with the elastomeric washer protruding from said recess.

Conveniently the recess in the fastener head is circular and the metal washer of the seal may be of flat annular form. Alternatively the metal washer of the seal may be of domed annular form, the convex surface of which fits within said recess. The elastomeric washer is conveniently of flat annular form and is of a diameter less than the diameter of the metal washer.

The fastener of the fastener and seal combination conveniently comprises a self tapping screw with self tapping threads on the shank thereof. Furthermore the screw may be provided with a drill point at its leading end. Alternatively the fastener may comprise a wood screw.

Other features of the invention will become apparent from the following description given herein solely by way of example with reference to the accompanying drawings wherein:

Figure 1 is a side cross-sectional view of a fastener and seal combination in accordance with the invention wherein the fastener comprises a self tapping screw shown securing a thin metal sheet to a steel purlin; and

Figure 2 is a similar side cross-sectional view to that of Figure 1 showing the fastener tightened down on to the sheet material.

In the drawings the fastener of the fastener and seal combination of the invention is shown as comprising a self tapping screw used for the connection of thin sheet material 10 to a rigid support 12 such as a steel purlin. The outer sheet material 10 may be aluminium or steel. Although the fastener is illustrated as being a self tapping screw it will be appreciated that the fastener may be a self drilling self tapping screw such as for example of the type having a drill point formed thereon at its leading end whereby the fastener may drill its own hole through the sheet material and through the purlin.

The fastener has a threaded shank 14 and an enlarged head 16 comprising a plastics moulding which is moulded in situ around a staked upper end 18 of the fastener shank. The enlarged plastics head is provided around its periphery with axially extending grooves for enabling it to be engaged by a suitable chuck of a power driving tool and is provided on its under-surface with a circular recess 20 bounded by a peripheral lip 22.

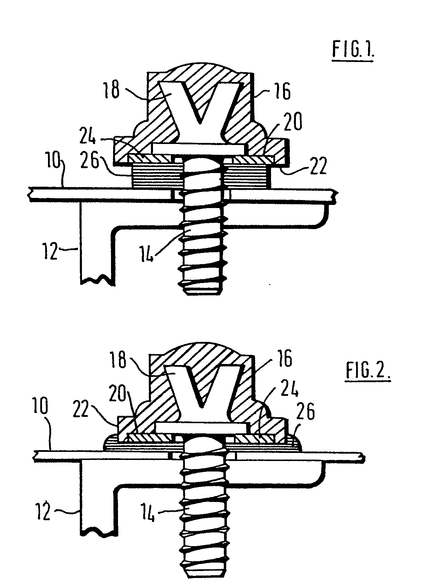

As is best seen from Figure 1, the seal comprises a metal washer 24 and an elastomeric washer 26 bonded thereto. In this construction both the metal washer 24 and the elastomeric washer 26 are of flat annular form with the diameter of the elastomeric washer being somewhat less than the diameter of the metal washer. The metal washer 24 is shaped to be a snug fit within the circular recess 20 in the plastics head of the fastener. The axial dimension of the elastomeric washer is somewhat greater than that of the metal washer. The metal washer 24 is formed of steel and the elastomeric washer 26 is formed of a synthetic rubber.

Figure 2 of the drawings shows the fastener tightened down upon the outer sheet material 10 thus causing the material of the elastomeric washer 26 to be "extruded" radially beyond the confines of the plastics head 16 to provide a seal with the outer face of the sheet material 10. The fact that the elastomeric washer is bonded to the metal washer, and the metal washer is restrained within the recess in the plastics head, ensures an even distribution of the elastomeric material during the tightening down operation.

As stated hereinbefore, the metal washer 24 may be flat as illustrated, or may be dome-shaped with its convex outer surface directed towards the recess 20 in the fastener head. In either construction, the metal washer 24 and the fastener head 16 may be arranged relative to one another such that the metal washer 24, with its bonded washer 26, is either rotatable with, or stationary relative to, the head 16 when the fastener is tightened down.

Any subsequent relative movement of the outer sheet material relative to the fastener, such as may be occasioned by expansion and contraction of the sheet material, will not disturb the seal afforded by the elastomeric washer 26 which will be retained in its position due to its being bonded to the metal washer 24 as aforesaid.

4

CLAIMS

1. A fastener and seal combination characterised in that the fastener comprises a threaded shank (14) and an enlarged head (16) providing a recess (20) on its under surface, and in that the seal comprises a metal washer (24) having an elastomeric washer (26) bonded thereto with the metal washer of the seal being shaped to fit within said recess in the fastener head with the elastomeric washer protruding from said recess.

2. A fastener and seal combination as claimed in Claim 1 further characterised in that the recess (20) in the fastener head is circular and the metal washer (24) of the seal is of flat annular form.

3. A fastener and seal combination as claimed in Claim 1 further characterised in that the recess (20) in the fastener head is circular and the metal washer (24) of the seal is of domed annular form, the convex surface of which fits within said recess.

4. A fastener and seal combination as claimed in either one of claims 2 or 3 further characterised in that the elastomeric washer (26) is of flat annular form and is of a diameter less than the diameter of the metal washer (24).

5. A fastener and seal combination as claimed in any one of the preceding claims further characterised in that the fastener shank (14) is provided with self tapping threads thereon.

6. A fastener and seal combination as claimed in Claim 5 further characterised in that the fastener comprises a screw.

5

7. A fastener and seal combination as claimed in Claim 6 further characterised in that the fastener comprises a screw having a drill point at its leading end.

FIG.1.

FIG.2.

0108533

European Patent
Office

**EUROPEAN SEARCH REPORT**

Application number

## DOCUMENTS CONSIDERED TO BE RELEVANT

EP 83306368.8

| Category | Citation of document with indication, where appropriate, of relevant passages | Relevant to claim | CLASSIFICATION OF THE APPLICATION (Int. Cl. ³) |
|---|---|---|---|
| X | DE - A - 1 500 967 (SCHOMPER FRANZ)<br>* Claim 1; fig. 1,7 *<br>-- | 1 | F 16 B 29/00<br>F 16 B 39/34 |
| X | DE - A - 2 304 471 (ELCO INDUSTRIES INC.)<br>* Claim 1; pages 35-37 *<br>-- | 1 | |
| A | US - A - 4 189 979 (COLIN SILVER-WOOD)<br>* Abstract *<br>-- | 1 | |
| A | AT - B - 367 875 (ILLINOIS TOOL WORKS INC.)<br>* Claims 1-5; fig. 1 *<br>-- | 1 | |
| A | DE - A1 - 2 642 349 (ILLINOIS TOOL WORKS INC.)<br>* Pages 9-13; fig. 1,3,4 *<br>-- | 1 | **TECHNICAL FIELDS SEARCHED (Int. Cl. ³)**<br><br>F 16 B 29/00<br>F 16 B 39/00 |
| A | DE - B2 2 610 401 (ADOLF SCHNORR GMBH)<br>* Claim 1; fig. 1,2 *<br>-- | 1 | F 16 B 43/00 |
| A | DE - A - 1 901 504 (BERGHAUS AL-FRED)<br>* Claim 1; fig. 1 *<br>-- | 1 | |

The present search report has been drawn up for all claims

| Place of search | Date of completion of the search | Examiner |
|---|---|---|
| VIENNA | 30-12-1983 | REIF |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent
Office

**EUROPEAN SEARCH REPORT**

| Category | Citation of document with indication, where appropriate, of relevant passages | Relevant to claim |
|---|---|---|
| A | US - A - 4 302 136 (MICHIO ABE et al.) <br> * Abstract * <br> -- | 1 |
| A,P | EP - A1 0 066 794 (RUSSELL, BURDSALL & WARD CORPORATION) <br> * Abstract; fig. 2,5-9 * <br> ---- | 1 |

**DOCUMENTS CONSIDERED TO BE RELEVANT**

CLASSIFICATION OF THE APPLICATION (Int. Cl.³)

TECHNICAL FIELDS SEARCHED (Int. Cl.³)